# EUROPÄISCHE PATENTANMELDUNG

(11) **EP 1 072 536 A1**
(43) Veröffentlichungstag der Anmeldung: **31.01.2001**
(21) Anmeldenummer: 00115904.5
(22) Anmeldetag: 25.07.2000
(51) Int. Cl.: B65D 88/68

(54) **Umlaufelement für Trichter**

(30) Priorität: 26.07.1999 DE 19934149; 26.07.1999 DE 19934148; 26.07.1999 DE 19934147
(71) Anmelder: Neuhäuser GmbH, Umwelt-, Dosier- und Transporttechnologie, 44532 Lünen (DE)
(72) Erfinder: Siepert, Fredy, 59394 Nordkirchen (DE)
(74) Vertreter: COHAUSZ HANNIG DAWIDOWICZ & PARTNER

(57) **Zusammenfassung**

Die Erfindung betrifft eine Vorrichtung zur mechanischen Unterstützung des Fließens von mittel- bis schwerfließenden Medien oder des Rieseins von Schüttgut durch einen Trichter 1, umfassend einen Trichter 1 mit einer oberen Einlaßöffnung 3 und einer unteren Auslaßöffnung 4, sowie ein in einem Abstand von der Trichterinnenwandung umlaufendes Umlaufelement 16, das im Bereich der Einlaßöffnung 3 gelagert und angetrieben ist, wobei das Umlaufelement 16 über eine Lagerung gelagert ist, die die Einlaßöffnung 3 radial außerhalb umgibt.

## Beschreibung

Die vorliegende Erfindung betrifft eine Vorrichtung zur mechanischen Unterstützung des Fließens von mittel- bis schwerfließenden Medien oder des Rieseins von Schüttgut durch einen Trichter, umfassend einen Trichter mit einer oberen Einlaßöffnung und einer unteren Auslaßöffnung, sowie ein in einem Abstand von der Trichterinnenwandung umlaufendes Umlaufelement, das im Bereich der Einlaßöffnung gelagert und angetrieben ist.

Derartige Vorrichtungen sind als mechanische Austragshilfe bei Trichtern allgemein bekannt. Sie werden insbesondere in der Pharma-, Chemie- und Lebensmittelindustrie im Zusammenhang mit Dosiervorrichtungen für die Abfüllung von fließfähigen Medien oder rieselfähigem Schüttgut in Behälter oder Verpackungen eingesetzt. Dabei soll insbesondere auch bei zähen, schwerfließenden Medien mit hoher Viskosität sowie bei schwer rieselndem Schüttgut mit höheren Feuchtigkeitsanteilen ein einwandfreies Nachrutschen im Trichter und somit bei der gegebenenfalls folgenden Abfüllung eine exakte Dosierung erreicht werden.

Bei weiterhin bekannten Vorrichtungen ist das Umlaufelement unterhalb der unteren Auslaßöffnung des Trichters gelagert und angetrieben. Daher ist zwischen dem Antrieb und dem Umlaufelement eine Verbindung erforderlich, die durch die untere Auslaßöffnung durchgreift. Ein Verschluß, insbesondere ein dichter Verschluß der Auslaßöffnung des Trichters ist daher nicht oder nur mit sehr großem konstruktiven Aufwand möglich.

Aus der DE-OS 41 16 327 ist ein Rührwerk bekannt, bei dem die untere Auslaßöffnung nicht von dem Rührflügel bzw. Umlaufelement oder zugehörigen Verbindungselementen durchgriffen wird, so daß ein dichter Verschluß auf einfache Weise möglich ist. Jedoch ist das Umlaufelement hierbei zentral im Bereich der Trichtereinlaßöffnung gelagert und angetrieben, so daß die Einlaßöffnung nicht vollständig frei ist und ein zentraler Zufluß des Mediums bzw. Schüttguts nicht ungehindert möglich ist. Bei einer derartigen Vorrichtung ist lediglich ein exzentrisches Zuführen durch einen seitlichen Zuführstutzen möglich, wodurch es zu einem ungleichmäßigen Materialaufbau an einer Seite des Trichters kommt. Hierbei besteht insbesondere aufgrund von Verklemmungen der Schüttgüter (sogenannte Brückenbildung) die Gefahr von Verstopfungen im Trichter. Außerdem werden durch den ungleichmäßigen Ein- und Auslauf des Umlaufelementes in die Schüttgutanhäufungen in verstärktem Maße Energie und Turbulenzen in das Schüttgut eingebracht, was bei bestimmten Materialien zu unerwünschten Reaktionen oder sogar Zerstörungen führen kann.

Aufgabe der vorliegenden Erfindung ist es daher, eine leicht handhabbare und preiswert herzustellende Vorrichtung der eingangs genannten Art zu schaffen, die bei einfacher Konstruktion eine dichte Verschließbarkeit der Auslaßöffnung sowie eine ungestörte zentrale Befüllung des Trichters erlaubt und bei stabiler Ausführung das Nachrutschen bzw. das Nachfließen des Schüttgutes wirksam unterstützt.

Diese Aufgabe wird erfindungsgemäß durch eine Vorrichtung nach Anspruch 1 gelöst. Wesentlich ist dabei, daß das Umlaufelement im Bereich der oberen Einlaßöffnung über eine Lagerung gelagert ist, die die Einlaßöffnung mittelbar oder unmittelbar radial außerhalb umgibt. Vorzugsweise ist das Umlaufelement oberhalb der Einlaßöffnung gelagert und angetrieben.

Ein wesentlicher Vorteil der erfindungsgemäßen Vorrichtung besteht darin, daß die zentrale Einlaßöffnung des Trichter vollständig frei ist und ihrer freie Öffnungsfläche nicht durch Lagerungsmittel oder Antriebselemente des Umlaufelementes behindert wird. Auf diese Weise ist eine zentrale und über den Umfang gleichmäßige Befüllung des Trichters problemlos möglich, so daß eine Verstopfungsgefahr aufgrund ungleichmäßiger Materialanhäufungen auf einer Trichterseite nicht besteht. Auch kann die Einbringung von Energie und Turbulenzen in das Schüttgut bei wirksamer Unterstützung des Nachrutschens auf ein Minimum reduziert werden.

Ein weiterer wesentlicher Vorteil der erfindungsgemäßen Vorrichtung besteht darin, daß ein Durchgriff eines Verbindungselementes zwischen dem Umlaufelement und seiner Lagerung sowie seinem Antrieb durch die untere Auslaßöffnung des Trichters hindurch nicht mehr erforderlich ist. Dadurch kann auf konstruktiv besonders einfache Weise die Auslaßöffnung des Trichters dicht verschlossen werden.

Außerdem wird das Umlaufelement im Bereich der Einlaßöffnung des Trichters auf einem größeren Radius gelagert, so daß die Lagerung des Umlaufelementes stabiler ausgeführt ist als bei einer Lagerung an der kleineren unteren Auslaßöffnung des Trichters.

Das untere Ende des Umlaufelementes kann in einem vorzugsweise geringen Abstand oberhalb der Auslaßöffnung des Trichters umlaufen oder auch bis an den unteren Rand der Auslaßöffnung herangeführt sein. Auf diese Weise ist eine einfache Verschließbarkeit der Auslaßöffnung beispielsweise durch einen Schieber möglich.

Besonders vorteilhaft ist es, wenn der Trichter oben durch einen Deckel mit einer zentralen Einlaßöffnung abgeschlossen ist und alle Antriebselemente und Verbindungselemente zum Umlaufelement außerhalb der Einlaßöffnung angeordnet sind. Vorzugsweise wird dabei vorgeschlagen, daß der Deckel in dem die Einlaßöffnung umgebenden Randbereich eine ringförmige Öffnung aufweist, durch die ein Verbindungselement durchgreift, das das innerhalb des Trichters angeordnete Umlaufelement mit den außerhalb des Trichters angeordneten Lagerungsmitteln und Antriebselementen verbindet. Auf diese Weise kann die Einlaßöffnung des Trichters dicht an den Auslaß eines vorgeschalteten Behälters oder einer verfahrenstechnisch vorgeschalteten Maschine angeschlossen werden.

Gemäß einer bevorzugten besonders leicht abzudichtenden Ausführungsform der Erfindung ist das Verbindungselement durch einen Zwischenring gebildet, der drehbar in die ringförmige Ausnehmung eingesetzt ist. Dabei kann der Zwischenring vorzugsweise formschlüssig in der ringförmigen Öffnung einliegen und einen Lagerring der Lagerung bilden, die insbesondere als Gleitlagerung ausgeführt sein kann. Auch kann der Zwischenring den Lagerinnenring oder Lageraußenring eines Wälzlagers bilden.

Besonders vorteilhaft ist es, wenn das Umlaufelement über ein Wälzlager, insbesondere ein Kugellager gelagert ist. Dabei ist in einer bevorzugten Ausführungsform das Umlaufelement am Lageraußenring befestigt und der Lagerinnenring ist drehfest mit dem Trichter oder einem hieran befestigten Gestell- oder Gehäuseteil verbunden.

Besonders günstig ist es ferner, wenn das Umlaufelement insbesondere über eine Zahnrad-Ritzel-Verbindung von einem Pneumatikmotor angetrieben ist. Ein Pneumatikmotor zeichnet sich durch geringen Platzbedarf aus und gestattet den Einsatz auch bei explosionsgefährdeten Anwendungsbereichen. Die Umlaufgeschwindigkeit des Umlaufelementes kann dabei auf besonders einfache Weise durch die Verstellung von Drosselventilen variiert werden, die an oder vor dem Pneumatikmotor vorgesehen sind. So können beispielsweise Umlaufgeschwindigkeiten zwischen 15 und 60 Umdrehungen pro Minute eingestellt werden.

Besonders vorteilhaft ist es ferner, wenn Mittel zur Verstellung des Abstandes zwischen dem Umlaufelement und der Trichterinnenwandung vorgesehen sind. Auf besonders einfache Weise können derartige Mittel durch radial angeordnete Langlöcher gebildet sein, durch die Schrauben zur Befestigung des Umlaufelementes hindurchgreifen. Eine optimale Unterstützungswirkung kann dabei dadurch erreicht werden, daß das Umlaufelement bis auf ca. 0,5 mm an die Trichterinnenwand herangesetzt werden kann.

In einer bevorzugten Ausführungsform ist das Umlaufelement durch einen Schaber gebildet, der in geringem Abstand an der Trichterinnenwandung vorbeischabt. Auch ist es möglich, mehrere miteinander verbundene Schaber vorzusehen, die gemeinsam das Umlaufelement bilden. Dabei können die Schaber jeweils den gleichen oder vorzugsweise unterschiedliche Abstände zu der Trichterinnenwandung aufweisen.

Besonders vorteilhaft ist es, wenn an der Auslaßöffnung ein Absperrorgan angeordnet ist, mit dem die Auslaßöffnung, insbesondere in dichter Weise verschließbar oder teilweise oder vollständig freigebbar ist. So kann das Absperrorgan für eine nachfolgende Dosiervorrichtung in die erfindungsgemäße Vorrichtung integriert sein.

Besonders vorteilhaft ist es ferner, wenn die Lagerung und der Antrieb des Umlaufelementes mit dem Trichter und gegebenenfalls weiteren Komponenten der Vorrichtung nicht miteinander verschweißt, sondern über mehrere Zugmittel miteinander verspannt sind. Die Zugmittel können dabei in vorteilhafter Weise durch Montagesäulen gebildet sein, die mit Gewinden zum Aufschrauben von Muttern versehen sind. Hierdurch wird nicht nur ein möglicher Wärmeverzug beim Zusammenschweißen der Vorrichtung verhindert, sondern es ist mit sehr geringem Aufwand ein einfacher Austausch einzelner Teile der erfindungsgemäßen Vorrichtung möglich.

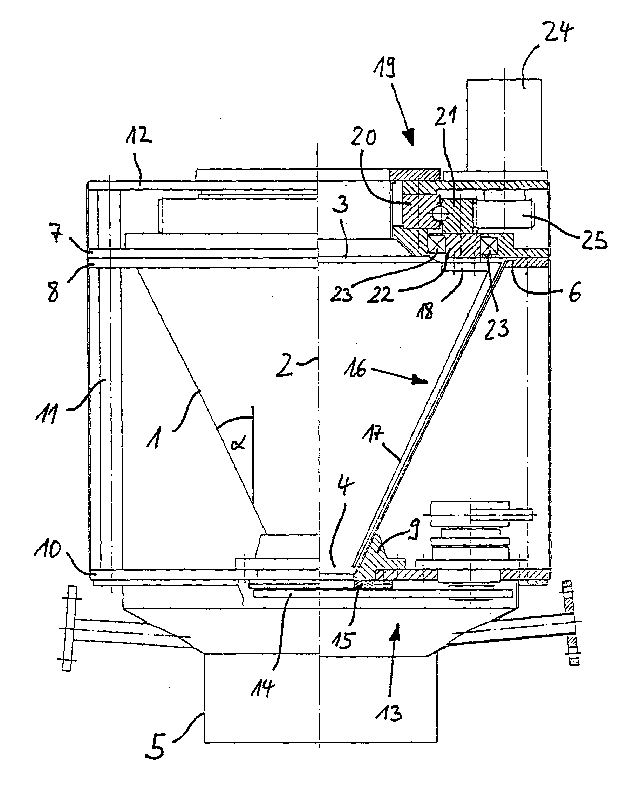

Weitere Vorteile und Merkmale der Erfindung ergeben sich aus der nachfolgenden Beschreibung und dem in der Zeichnung dargestellten Ausführungsbeispiel.

Die Zeichnung zeigt eine teilgeschnittene Seitenansicht einer erfindungsgemäßen Vorrichtung.

Die in der Zeichnung gezeigte Vorrichtung kann vorzugsweise in der Pharma-, Chemie- oder Lebensmittelindustrie eingesetzt werden. Sie dient dazu, ein gleichmäßiges Nachrutschen von in dem Trichter befindlichen Schüttgut zu gewährleisten.

Die Vorrichtung weist einen Trichter 1 auf, der um eine senkrechte Längsachse 2 angeordnet ist. Oberhalb der oberen, großen Einlaßöffnung 3 des Trichters 1 befindet sich ein nicht näher dargestellter Vorratsbehälter für das durch den Trichter 1 zu trichternde Schüttgut. Auf einem unterhalb der unteren kleinen Auslaßöffnung 4 des Trichters 1 angeordneten Stutzen 5 können Säcke befestigt werden, in die das Schüttgut abgefüllt wird.

Die Trichterabmessungen sind den Eigenschaften, insbesondere der Rieselfähigkeit des zu trichternden Schüttgutes angepaßt. In einer bevorzugten Ausführungsform hat der Trichter 1 bei einem Neigungswinkel α von 25° eine Einlaßöffnung 3 von 440 mm Durchmesser und eine Auslaßöffnung 4 von 80 mm Durchmesser. Ein Trichter 1 mit derartigen Abmessungen ist für viele, besonders häufig abzufüllende Schüttgutarten geeignet.

Der obere Teil des Trichters 1 weist umlaufend einen kleinen Bördelflansch 6 auf. Dieser Bördelflansch 6 wird zwischen eine mit einer zentralen Öffnung versehenen Deckel 7 der den Trichter 1 nach oben hin abschließt und einem Andrückflansch 8 geklemmt und bildet den oberen Abschluß der Vorrichtung.

Der untere Teil des Trichters 1 wird in eine Trichteraufnahme 9 eingesetzt, die mit einem Grundflansch 10 verschraubt ist. Der Grundflansch 10, der Andrückflansch 8 und der Deckel 7 werden über mehrere Montagesäulen 11, gegebenenfalls noch mit weiteren Komponenten, beispielsweise mit dem Flansch 12 eines darüber angeordneten großen Vorratsbehälters verspannt. Ein Verschweißen der einzelnen Bauteile ist hierbei nicht erforderlich. Hierdurch wird zum einen verhindert, daß durch das Anschweißen der Trichteraufnahmen 9 Wärmeverzug im Trichter 1 auftritt und zum anderen ist es dadurch auf besonders einfache Weise möglich, einzelne Teile mit geringem Aufwand auszutauschen.

Unterhalb der Trichteraufnahme 9 befindet sich ein Absperrorgan 13 mit einer um eine senkrechte Achse schwenkbaren Scheibe 14. Zwischen der Scheibe 14 und der Trichteraufnahme 9 ist eine Dichtbuchse 15 aus Polytetrafluorethylen (PTFE) angeordnet, die die Scheibe 14 in der Verschlußstellung gegen die Trichterauflage 9 bzw. gegen den Trichter 1 abdichtet.

Als mechanische Austragshilfe ist in einem geringen Abstand von 0,5 mm zu der Innenwandung des Trichters 1 ein um die Längsachse 2 umlaufendes Umlaufelement 16 vorgesehen, daß ein einwandfreies Nachrutschen des Schüttgutes im Trichter 1 sicherstellt. Das Umlaufelement 16 besteht aus einem parallel zur Trichterinnenwandung angeordneten messerförmigen Schaber 17 und einem parallel zur Ebene der Einlaßöffnung 3 angeordneten Befestigungssteg 18.

An dem die Einlaßöffnung 3 umgebenden Bereich des Deckels 7 ist ein Wälzlager 19 angeordnet, dessen Innenring mit dem Deckel 7 drehfest verbunden ist und an dessen Außenring 21 der Befestigungssteg 18 des Umlaufelementes 16 befestigt ist. Der Befestigungssteg 18 ist dabei über in radialer Richtung angeordnete Langlöcher an einem mit dem Außenring 21 des Kugellagers 19 verbundenen Zwischenring 22 angeschraubt, so daß eine einfache Einstellung des radialen Abstandes zwischen de Schaber 17 und der Trichterinnenwandung möglich ist. Zur staubdichten Abdichtung sind zwischen dem Zwischenring 22 und den radial innen und außen liegenden Bereichen des Deckels 7 Dichtungsringe 23 angeordnet.

Der Außenring 21 des Kugellagers 19 ist mit einer Außenverzahnung versehen, in die ein von einem Pneumatikmotor 24 angetriebenes Ritzel 25 eingreift. Der Pneumatikmotor 24 ist an dem Bodenflansch 12 des nicht näher dargestellten Vorratsbehälters befestigt und wird über ein nicht dargestelltes Magnetventil angesteuert, das in einem benachbarten Pneumatikschaltschrank angeordnet ist. Der Pneumatikmotor 24 hat nur einen geringen Platzbedarf und zeichnet sich durch seine explosionsschutzgemäße Bauweise aus.

Durch das außerhalb der Einlaßöffnung 3 angeordnete Kugellager 19 wird eine besonders einfache und zugleich stabile Lagerung des Umlaufelementes 16 erreicht. Dabei können auch mehrere Schaber 17 an dem Zwischenring 22 befestigt werden.

Der Trichter 1 ist nicht aus einer Abwicklung zusammengeschweißt, sondern wird auf einer Spezialmaschine aus einer Ronde im kalten Zustand herausgedrückt. Durch eine derartige Fertigungsmethode ist eine sehr viel höhere Fertigungsgenauigkeit mit einer Toleranz im Mikrometerbereich erreichbar. Die Trichterinnenwände werden hochglanzpoliert, so daß eine Oberflächenrauhigkeit Rₐ von ca. 0,4 µm erreicht werden kann. Dadurch kann der Schaber 17 in einem besonders geringem Abstand an der Trichterinnenwandung umlaufen.

## Patentansprüche

1. Vorrichtung zur mechanischen Unterstützung des Fließens von mittel- bis schwerfließenden Medien oder des Rieseins von Schüttgut durch einen Trichter, umfassend einen Trichter mit einer oberen Einlaßöffnung und einer unteren Auslaßöffnung, sowie ein in einem Abstand von der Trichterinnenwandung umlaufendes Umlaufelement, das im Bereich der Einlaßöffnung gelagert und angetrieben ist,
**dadurch gekennzeichnet,**
daß das Umlaufelement (16) über eine Lagerung gelagert ist, die die Einlaßöffnung (3) radial außerhalb umgibt.

2. Vorrichtung nach Anspruch 1, **dadurch gekennzeichnet,** daß das untere Ende des Umlaufelementes (16) oberhalb der Auslaßöffnung (4) umläuft.

3. Vorrichtung nach Anspruch 1 oder 2, **dadurch gekennzeichnet,** daß das Umlaufelement (16) oberhalb der Einlaßöffnung (3) gelagert und angetrieben ist.

4. Vorrichtung nach einem der vorherigen Ansprüche, **dadurch gekennzeichnet,** daß der Trichter (1) oben durch einen Deckel (7) mit einer zentralen Einlaßöffnung (3) abgeschlossen ist und alle Antriebselemente (24, 25) und Verbindungselemente (18, 22) zum Umlaufelement (16) außerhalb der Einlaßöffnung (3) angeordnet sind.

5. Vorrichtung nach Anspruch 4, **dadurch gekennzeichnet,** daß der Deckel (7) in dem die Einlaßöffnung (3) umgebenden Randbereich eine ringförmige Öffnung aufweist, durch die ein Verbindungselement (22) durchgreift, das das innerhalb des Trichters (1) angeordnete Umlaufelement (16) mit den außerhalb des Trichters (1) angeordneten Lagerungsmitteln (19) und Antriebselementen (24, 25) verbindet.

6. Vorrichtung nach Anspruch 5, **dadurch gekennzeichnet,** daß das Verbindungselement durch einen Zwischenring (22) gebildet ist, der drehbar in die ringförmige Ausnehmung eingesetzt ist.

7. Vorrichtung nach Anspruch 6, **dadurch gekennzeichnet,** daß der Zwischenring (22) einen Lagerring der Lagerung, insbesondere den Lagerinnenring oder Lageraußenring eines Wälzlagers (19) bildet.

8. Vorrichtung nach einem der vorherigen Ansprüche, **dadurch gekennzeichnet,** daß das Umlaufelement (16) über ein Wälzlager, insbesondere ein Kugellager gelagert ist, wobei das Umlaufelement (16) am Lageraußenring (21) befestigt ist und der Lagerinnenring (20) drehfest mit dem Trichter (1) verbunden ist.

9. Vorrichtung nach einem der vorherigen Ansprüche, **dadurch gekennzeichnet,** daß das Umlaufelement (16) insbesondere über eine Zahnrad-Ritzel-Verbindung von einem Pneumatikmotor (24) angetrieben ist.

10. Vorrichtung nach Anspruch 9, **dadurch gekennzeichnet,** daß zur Steuerung der Umlaufgeschwindigkeit des Umlaufelementes (16) Drosselventile an oder vor dem Pneumatikmotor (24) vorgesehen sind.

11. Vorrichtung nach einem der vorherigen Ansprüche, **dadurch gekennzeichnet,** daß Mittel zur Verstellung des Abstandes zwischen dem Umlaufelement (16) und der Trichterinnenwandung vorgesehen sind.

12. Vorrichtung nach einem der vorherigen Ansprüche, **dadurch gekennzeichnet,** daß das Umlaufelement (16) durch einen oder mehrere miteinander verbundene Schaber (17) gebildet ist.

13. Vorrichtung nach einem der vorherigen Ansprüche, **dadurch gekennzeichnet,** daß an der Auslaßöffnung (4) ein Absperrorgan (13) angeordnet ist, mit dem die Auslaßöffnung (4) insbesondere abgedichtet verschließbar sowie teilweise oder vollständig freigebbar ist.

14. Vorrichtung nach einem der vorherigen Ansprüche, **dadurch gekennzeichnet,** daß die Lagerung und der Antrieb des Umlaufelementes mit dem Trichter (1) und gegebenenfalls weiteren Komponenten der Vorrichtung über mehrere Zugmittel (11) miteinander verspannt sind.

15. Verfahren zur Unterstützung des Fließens von mittel- bis schwerfließenden Medien oder des Rieseins von Schüttgut durch eine Vorrichtung nach einem der vorherigen Ansprüche, **dadurch gekennzeichnet,** daß das Umlaufelement nur dann angetrieben wird, wenn bei geöffneter Auslaßöffnung kein selbsttätiger Austrag des Mediums bzw. des Schüttgutes aus dem Trichter erfolgt.
